# EUROPEAN PATENT APPLICATION

(11) **EP 0 536 923 A1**
(43) Date of publication of application: **14.04.1993**
(21) Application number: 92308721.7
(22) Date of filing: 24.09.1992
(51) Int. Cl.: B60R 7/02, F16B 21/02

(54) **Hanger**

(30) Priority: 07.10.1991 US 772259
(71) Applicant: EMHART INC., Newark, Delaware 19711 (US)
(72) Inventor: Burns, Timothy J., St. Clair, Michigan 48079 (US)
(74) Representative: Wetters, Basil David Peter (GB)

(57) **Abstract**

A one piece plastic hanger includes a hook 13 at one end and a quarter turn fastener 20 at the other end. The latch member 22 of the quarter turn fastener is inserted into a suitable hole 24 in a wall and the hook is rotated 90° to secure the fastener. A pair of keys 32 on the locating plate of the quarter turn fastener enter the hole when so rotated to prevent further rotations.

## Description

The present invention relates to hangers primarily for use in automobiles.

Cargo nets are held in position in the trunk area of automobiles with the use of cargo net hooks which are secured to the automobile body. Conventionally, the hook element is secured in place either by threading the hook onto a threaded stud welded to the body or the cargo net hook has a threaded screw which is received by a "J" not clipped to the body. Attachment accordingly requires threading one part on another and such a procedure is very undesirable.

It is accordingly an object of the present invention to provide a new cargo net hook or other hook which can be easily secured to the car body.

Other objects and advantages of the present invention will become apparent from the following portion of this specification and from the accompanying drawings which illustrate in accordance with the mandate of the patent statutes a presently preferred embodiment incorporating the principles of the invention.

The invention generally discloses a fastening system for securing a hook to the wall of a vehicle comprising
a selectively shaped opening the wall,
a one piece plastic hanger including
hook means having a post at one end thereof, and
means at the other end for securing the hook means to the wall including
a quarter turn fastener including a latch member selectively configured for insertion into the opening,
means for limiting insertion of the latch member into the hole so that when the latch member is rotated by 90°, the latch member will engage the inside surface of the wall, and
means for preventing further rotation of the latch member after it has been rotated by 90°.

Referring to the drawings:
Figure 1 is an oblique view of the cargo net hook made in accordance with the teachings of the present invention; and
Figure 2 is a similar view of the cargo net hook fastened to the wall of a car, for example.

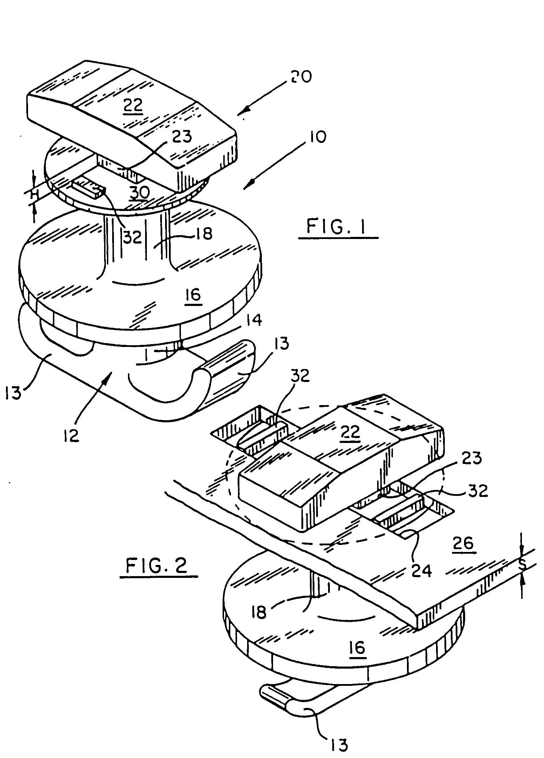

A cargo net hook 10 is conventionally made up of a hook portion 12 having a pair of hook elements 13, a central post 14 and a disc 16 into which the central post 14 merges. As shown in Figure 1, the inventive cargo net hook further includes a second post 18 which extends between the disc 16 and a quarter turn fastener 20. This quarter turn fastener has a rectangular latch 22 which is configured so that it can be inserted through a similar hole 24 in the wall 26 of a car or the like and rotated one quarter of a turn to secure the cargo net hook to the car wall. A locating plate 30 is separated from the latch 22 by a hub 23 having a height H corresponding to the thickness S of the wall and includes a pair of keys 32 which will be received within the wall opening when the latch 22 has been rotated 90° to prevent subsequent rotation of the cargo net hook.

In a cargo net application, layers of carpet and insulation are located between the locating plate 30 and the disc 16 and the spacing therebetween is selected to accommodate these layers. The hook can be single, double or otherwise and can hold not only cargo nets but coat hangers, etc... and where no spacing is required between the disc and its locating plate these two members can be combined into one member. The entire hanger is made in one piece from plastic.

## Claims

1. A fastening system for securing a hook to the wall of a vehicle characterized by
a selectively shaped opening 24 in said wall,
a one piece plastic hanger 10 including
hook means 13 having a post 14 at one end thereof, and
means for securing said hook means to said wall including
a quarter turn fastener 20 including a latch member 22 selectively configured for insertion into said opening,
means 30 for limiting insertion of said latch member into the hole so that when said latch member is rotated by 90°, said latch member will engage the inside surface of the wall, and
means 32 for preventing further rotation of said latch member after it has been rotated by 90°.

2. A fastening system according to claim 1, wherein said limiting means comprises a cylindrical plate 30 including a central hub 23 for supporting said latch member at a selected spacing from said cylindrical plate.

3. A fastening system according to claim 2 further comprising
disc means 16 connected to said post 14 and shaft means 18 for connecting said disc and said plate at a predetermined spacing.

4. A fastening system according to claim 3, wherein said plate 30 includes a pair of non-rotatable keys 32 on the wall engaging face thereof for insertion into the hole in the wall when said latch member has been rotated 90°.
